# EUROPEAN PATENT APPLICATION

(11) **EP 1 199 661 A2**
(43) Date of publication of application: **24.04.2002**
(21) Application number: 01306330.0
(22) Date of filing: 24.07.2001
(51) Int. Cl.: G06F 17/60

(54) **Facility information providing system and method**

(30) Priority: 29.08.2000 JP 2000258833
(71) Applicant: Pioneer Corporation, Tokyo-to (JP); Increment P Corporation, Tokyo-to (JP)
(72) Inventor: Nozaki, Takashi, c/o Increment P Corporation, Tokyo-to (JP)
(74) Representative: Townsend, Victoria Jayne

(57) **Abstract**

A facility information providing system comprises a facility information providing site (4), a wireless transmitter-receiver (2) and a portable terminal (7). The facility information providing site (4) provides predetermined information in response to a facility. The facility information providing site (4) includes a facility information database (6) for storing the predetermined information in response to the facility and a facility information providing server (5). The wireless transmitter-receiver (2) is disposed in the facility or on a predetermined position in the vicinity of the facility, for transmitting predetermined information in response to the facility, which is provided from the facility information providing site (4), by wireless. The portable terminal (7) includes a device for receiving the predetermined information transmitted from the wireless transmitter-receiver (2) and a device for presenting the predetermined information received.

## Description

### BACKGROUND OF THE INVENTION

### Field of the Invention

The present invention relates to an information providing system and a method thereof, which is capable of providing information with regard to a facility such as a store in a shopping mall, a movie theater or the like.

### Description of the Related Art

Advertising displays are often found out in front of facilities in a shopping mall, in which the facilities such as a store for selling various commodities, a movie theater or the like stand in a row, to advertise services (for example, free drink service at an eating and drinking place), which are available in these facilities. A user walking in the shopping mall determines to enter the facility with seeing these advertising displays.

On the other hand, in recent years, a portable terminal (for example, a portable telephone), which is loaded with a GPS (Global Positioning System) function, has been brought to the knowledge of people. According to this GPS function, it is possible to detect a location of a portable telephone by receiving radio waves from a GPS satellite by the portable telephone.

However, in a shopping mall which is very crowded at holiday, shoppers walking there is not capable of seeing advertising displays in respective facilities well, so that they pass over and advertising effects by the advertising displays may not be expected.

Alternatively, for example, in the case that a user of a portable telephone set loaded with the GPS function is walking in an underground shopping mall, in which the radio waves from the GPS satellite are shut off, a location of this user's portable telephone set is not capable of being detected.

### SUMMARY OF THE INVENTION

The present invention has been made taking the foregoing problem into consideration, an object of the invention is to provide a facility information providing system and a method for providing a facility information, which are capable of providing the information in response to respective facilities for every facility to a user of a portable telephone set in real time. Additionally, another object of the invention is to provide a facility information providing system and a method for providing a facility information, which are capable of easily detecting a location of a user of a portable telephone set even in an underground shopping arcade.

According to the above described invention, predetermined information in response to the corresponding facility is transmitted from a facility information providing site to a wireless transmitter-receiver, which is disposed in a facility or in a predetermined position in the vicinity of the facility. In the next place, predetermined information in response to the facility is transmitted by wireless from a wireless transmitter-receiver to a portable terminal. Then, the transmitted predetermined information is received by the portable terminal and this predetermined information is presented to a user of this portable terminal. Accordingly, a user of the portable terminal is capable of receiving the predetermined information in response to the facility (for example, a store and a movie theater) from the portable terminal at real time. Alternatively, respective facilities can increase their advertising effects.

According to the above described invention, a location of a portable terminal is detected. Then, in the case that this location is within a predetermined range in the vicinity of a facility, predetermined information in response to the corresponding facility is transmitted by wireless from a wireless transmitter-receiver of the corresponding facility to a portable terminal. Accordingly, the user of the portable terminal is capable of receiving the predetermined information in response to the facility from the portable terminal at real time in the case that he or she enters a predetermined range in the vicinity of the facility.

Therefore, a user of a portable terminal is capable of receiving predetermined information in response to a facility even when he or she is located outside the predetermined range in the vicinity of the facility.

Therefore, the user of the portable terminal is capable of receiving the predetermined information of a plurality of facilities at real time by the portable terminal.

Accordingly, the user of the portable terminal is capable of receiving information of a multi media such as visual information, voice information, text information and the like of a plurality of facilities by the portable terminal.

According to the invention constituted as the above described sixth or thirteenth aspect, predetermined information in response to a facility is transmitted via a communication device from a plurality of wireless transmitters-receivers, which are disposed in a facility or in a predetermined position in the vicinity of the facility in response to the corresponding facility. Then, the predetermined information of the facility corresponding to the wireless transmitter-receiver is transmitted to the foregoing portable terminal within a communicable range from the corresponding wireless transmitter-receiver. The portable terminal receives the predetermined information of the facility, which is transmitted from the wireless transmitter-receiver, to present it to the user of the portable terminal. Accordingly, the user of the portable terminal is capable of receiving the predetermined information in response to the facility corresponding to the wireless transmitter-receiver at real time in the case that the user enters the range in which the wireless transmitter-receiver is capable of communicating. Alternatively, respective facilities can increase their advertising effects.

According to the above described invention, for example, even in the case that a user of a portable terminal is walking in an underground shopping mall (a plurality of facilities are disposed), in which the radio waves from the GPS satellite are shut off, a location of this user's portable terminal is capable of being detected.

Accordingly, a user of a portable terminal is capable of receiving predetermined information in response to a facility even when the user is located outside the predetermined range in the vicinity of the facility.

Therefore, a user of a portable terminal is capable of receiving the information of a multimedia such as visual information, voice information, text information and the like of a plurality of facilities by the portable terminal.

Accordingly, a user of a portable terminal is capable of booking a facility and putting in an order for the commodities provided in the facility by the portable terminal.

### BRIEF DESCRIPTION OF THE DRAWINGS

FIG. 1 is a descriptive view illustrating a schematic constitution of a facility information providing system according to the present invention;
FIG. 2 is a flow chart for showing the operation of the facility information providing system in the case that a user of a portable terminal is walking in a shopping mall 1; and
FIG. 3 is a diagram for illustrating an example such that specific information of a teahouse is displayed on a display of a portable terminal of a user of the portable terminal when the portable terminal of that user is located within a communicable range of a wireless transmitter-receiver of the teahouse.

### DESCRIPTION OF THE PREFERRED EMBODIMENTS

Preferred embodiments of the present invention will be explained below with reference to the drawings.

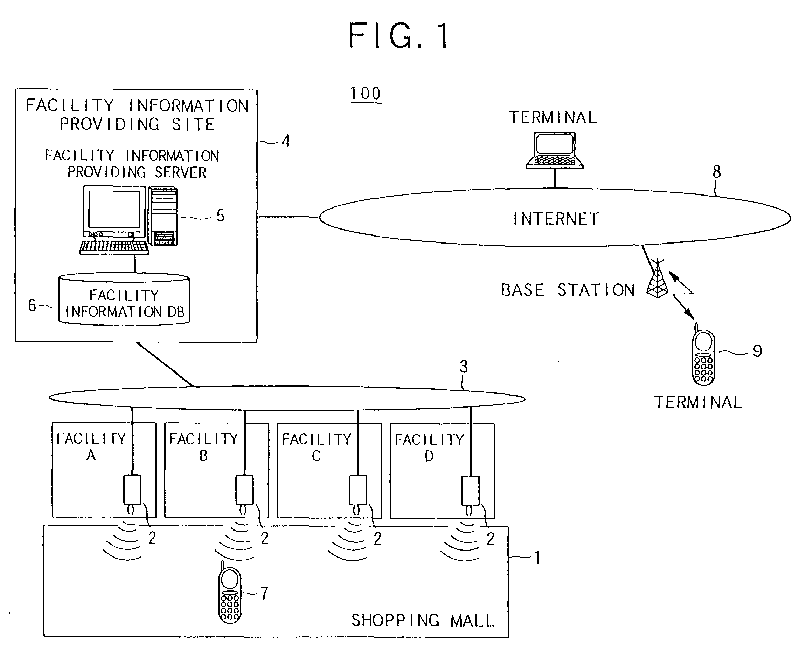

FIG. 1 illustrates a schematic constitution of a facility information providing system 100 according to the present invention. As shown in FIG. 1, wireless transmitter-receivers 2 are disposed respectively in the facilities such as a store and a movie theater in a shopping mall 1. However, the wireless transmitter-receiver 2 may be disposed on a predetermined position in the vicinity of each facility, for example, on an electric pole in the vicinity of each facility. The wireless transmitter-receiver 2 is connected to a facility information providing site 4 via a back end network 3. This back end network 3 is built by, for example, an existing public circuit. However, this back end network 3 may be built by a dedicated circuit.

The facility information providing site 4 is provided with a facility information providing server 5 and a facility information database 6. The facility information providing site 4 is connected to an Internet 8 and has a function as a WWW site to provide information on the Internet 8. The specific information in response to each facility is stored (registered) in a facility information database 6 for every facility. Such information is accumulated corresponding to an address of the wireless transmitter-receiver 2 of respective facilities. For example, if the facility is a restaurant, information with regard to a menu, a today's recommended dish and the like is included in the specific information. Alternatively, for example, if the facility is a bookstore, information such as the best ten on sale is included in the specific information. If the facility is a movie theater, information such as movie information, a showing schedule and the like is included in the specific information. Additionally, such information includes information of a multi media such as visual information, voice information, text information and the like. Further, the visual information also includes a moving image in addition to a static image such as character, drawing, picture and the like.

The facility information providing server 5 regularly provides the information in response to respective facilities to the wireless transmitter-receiver 2 of respective facilities via the back end network 3. The facility information providing server 5 is capable of providing the information in response to respective facilities to a terminal 9 accessing the facility information providing site 4 via the Internet 8.

The wireless transmitters-receivers 2 are provided with specific addresses, respectively and the information in response to respective facilities is provided from the facility information providing site 4 via the back end network 3. Additionally, the wireless transmitter-receiver 2 has a function to transmit the information provided from the facility information providing site 4 to a portable terminal 7 by a communication device by wireless. As such a function, for example, a communication standard called "Bluetooth" is used. Under the Bluetooth standard, a band pass of 2.4 GHz, which is called an ISM (Industrial Scientific and Medical) band pass, is used and a frequency popping system, which is a kind of a spectrum diffusion system, is employed to decrease the interference with other apparatuses. The communication range of the transmitter-receiver under the Bluetooth standard is a close range and it extends for about 10 meters on the periphery thereof. A size of the transmitter-receiver is very small, so that it is also stored in the portable terminal 7. Therefore, the portable terminal 7 is capable of receiving the information transmitted from the wireless transmitter-receiver 2. The received information is displayed on a display provided with the portable terminal 7. The portable terminal 7 is also capable of transmitting the information to the facility information providing site 4 via the wireless transmitter-receiver 2 and the back end network 3.

Alternatively, the information received by the portable terminal 7 varies depending on a position of its portable terminal 7. For example, as shown in FIG. 1, when the portable terminal 7 is located in the vicinity of a facility B (i.e., when the portable terminal 7 is located within a communication range of the wireless transmitter-receiver 2 of the facility B), information with regard to the facility B is received. When the portable terminal 7 is located in the vicinity of a facility A (i.e., when the portable terminal 7 is located within a communication range of the wireless transmitter-receiver 2 of the facility A), information with regard to the facility A is received.

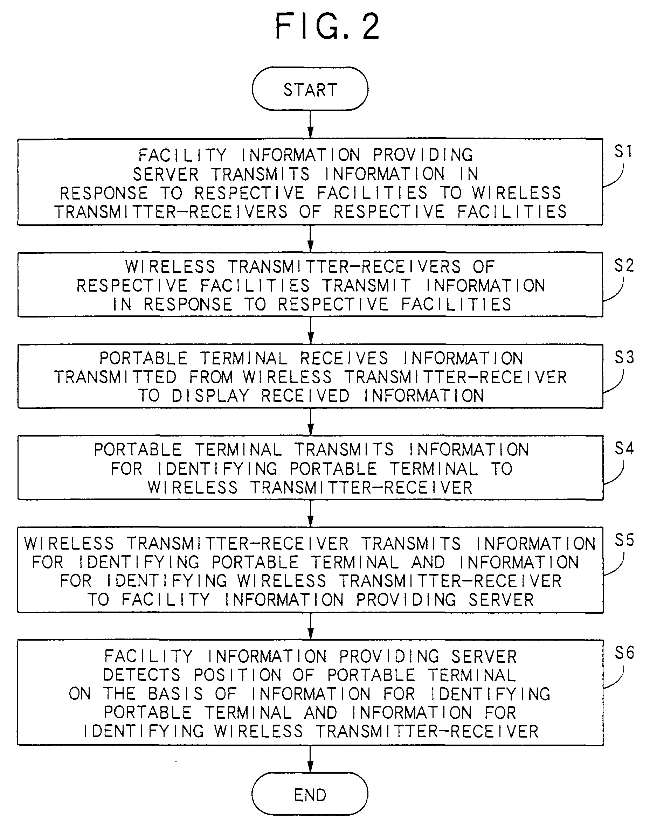

Now, the operation of the facility information providing system 100 according to the present invention will be explained with reference to a flow chart in FIG. 2. FIG. 2 is a flow chart for showing the operation of the facility information providing system 100 in the case that a user of a portable terminal 7 is walking in a shopping mall 1.

The facility information providing server 5 reads out specific information in response to respective facilities from the facility information database 6 and circularly transmits the specific information to the wireless transmitter-receiver 2 of respective facilities via the back end network 3 on the basis of the address of the wireless transmitters-receivers 2 of respective facilities (S1). The wireless transmitter-receiver 2 of respective facilities receives the information transmitted from the facility information providing server 5 to transmit the received information by wireless (S2). Such information is always transmitted from the wireless transmitter-receiver 2. More specifically, the wireless transmitter-receiver 2 transmits such information despite whether or not the portable terminal 7 is located within the communication range.

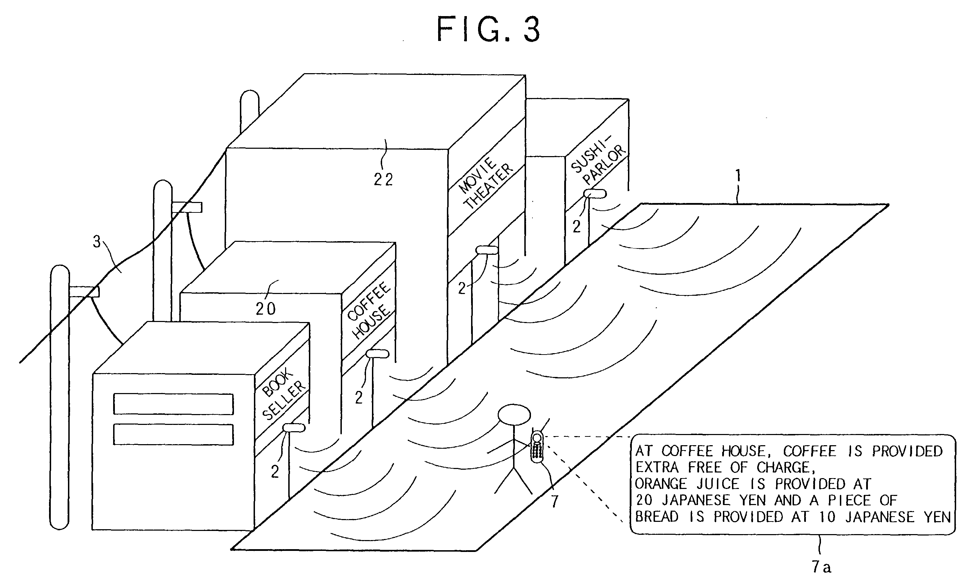

If a user of the portable terminal 7 provided with a transmitter-receiver of the Bluetooth standard, is walking in the shopping mall 1 to enter a communication range of the wireless transmitter-receiver 2, the portable terminal 7 receives the information transmitted from the wireless transmitter-receiver 2 to display the received information on the display (S3). FIG. 3 is a diagram for illustrating an example such that specific information of a teahouse 20 is displayed on a display 7a of a portable terminal 7 of a user of the portable terminal 7 when the portable terminal 7 of that user is located within a communicable range of a wireless transmitter-receiver 2 of the teahouse 20. When a user of a portable terminal does not have the portable terminal 7 provided with the transmitter-receiver of the Bluetooth standard, for example, the transmitter-receiver of the Bluetooth standard is handed to the user at an entrance of the shopping mall 1, so that the user is capable of using his or her portable terminal as well as the portable terminal 7 provided with the transmitter-receiver of the Bluetooth standard by connecting the transmitter-receiver of the Bluetooth standard to his or her portable terminal.

If the portable terminal 7 receives the information transmitted from the wireless transmitter-receiver 2, the portable terminal 7 transmits information for identifying the portable terminal 7 (for example, ID of a portable terminal, a name and an address of a user of the portable terminal 7), which is stored in an inner memory of the portable terminal 7, to the wireless transmitter-receiver 2 (S4). Then, the wireless transmitter-receiver 2 transmits information with regard to the user of the portable terminal 7 and information for identifying the wireless transmitter-receiver 2 of the user to the facility information providing site 4 via the back end network 3 (S5). The facility information providing server 5 of the facility information providing site 4 detects a position of the portable terminal 7 on the basis of the transmitted information for identifying the portable terminal 7 and the transmitted information for identifying the wireless transmitter-receiver 2 (S6). Therefore, the facility information providing site 4 is capable of comprehending in the vicinity of what facility the user of the portable terminal is walking now. Accordingly, it is possible to check a position of the user even in the case that the user is located in the underground shopping mall so that the GPS function is not capable of detecting the user's position (for example, a place where an electric wave from the GPS satellite is shut off).

According to the example shown in FIG. 3, if the user of the portable terminal 7 comes out from the communication range of the teahouse 20, specific information of the teahouse 20 is not received. However, when the user of the portable terminal 7 enters the communication range of the adjacent movie theater 22, the user receives specific information of the movie theater 22 in this time. Thus, the user can watch the specific information of respective facilities at real time one after another as he or she is walking in the shopping mall 1. Additionally, even in the case that the shopping mall 1 is crowded, respective stores can provide the specific information thereof to the portable terminals of the users who are walking there, so that they can increase their advertising effects.

Alternatively, booking information of a facility and order information of the commodities provided in the facility are provided from the facility information providing server 5 to the portable terminal by using a bi-directional communication, so that it is possible to book the facility and to put an order for the commodities provided in the facility from the portable terminal.

Additionally, even in the case that the user of the portable terminal 7 comes out from the shopping mall 1 so that he or she is out of the communication range of the wireless transmitter-receiver 2 of respective facilities, the user is capable of obtaining specific information in response to respective facilities by accessing the facility information providing site 4 from the portable terminal 7 via a base station and the Internet 8.

According to the above-described embodiment, the specific information in response to respective facilities are regularly transmitted from the wireless transmitter-receiver 2. However, as another embodiment, for example, there may be provided a detecting device for detecting a position of the portable terminal 7 by receiving an electric wave transmitted from the wireless transmitter-receiver provided with the portable terminal 7 by an antenna disposed in the respective facilities, so that the wireless transmitter-receiver 2 transmits the specific information in response to the respective facilities to the portable terminal 7 in the case that the detecting device detects that the portable terminal 7 enters the communication range of the wireless transmitter-receiver 2 of the facilities.

If the portable terminal 7 is loaded with a navigation function (for example, a GPS function), the portable terminal 7 regularly transmits information for showing a position of the portable terminal 7 (latitude data and longitude data), which is detected by the navigation function, to the facility information providing site 4 via the base station and the Internet 8. The facility information providing server 5 of the facility information providing site 4 determines whether or not the portable terminal 7 enters the communication range of the wireless transmitter-receiver 2 of any facility on the basis of the transmitted positional information of the portable terminal 7. The present invention may be constituted in such a manner that, if it determines that the portable terminal 7 enters the communication range of the wireless transmitter-receiver 2 of any facility, facility information providing server 5 may transmit the specific information in response to the respective facilities to the portable terminal 7 via the back end network 3 and the wireless transmitter-receiver 2.

As described above, according to the present invention, it is possible to provide the information in response to respective facilities for every facility to the user of the portable terminal at real time. Accordingly, it is possible to increase the advertising effects of respective facilities. Alternatively, it is possible to easily detect a position of the user of the portable terminal even in an underground shopping mall or the like.

## Claims

1. A facility information providing system comprising:
a facility information providing site (4) for providing predetermined information in response to at least one facility, said facility information providing site including a facility information database (6) for storing the predetermined information in response to the at least one facility and a facility information providing server (5);
a wireless transmitter-receiver (2), which is disposed in the at least one facility or on a predetermined position in the vicinity of the at least one facility, for transmitting predetermined information in response to the at least one facility, which is provided from the at least one facility information providing site (4), by wireless; and
a portable terminal (7) including a device for receiving the predetermined information transmitted from the wireless transmitter-receiver (2) and a device for presenting the predetermined information received.

2. The facility information providing system according to claim 1, **characterized in that**:
the facility information providing system includes a position detecting device for detecting a position of the portable terminal (7); and
the wireless transmitter-receiver (2) of the at least one facility transmits the predetermined information in response to the at least one facility to the portable terminal (7) by wireless, when the position of the portable terminal (7) detected is located within a predetermined range in the vicinity of the at least one facility.

3. The facility information providing system according to claim 2, **characterized in that**:
the facility information providing site (4) is connected to a network; and
the portable terminal (7) is connected to the facility information providing site (4) via the network to obtain the predetermined information in response to the at least one facility, when the position of the portable terminal (7) is not located within the predetermined range in the vicinity of the at least one facility.

4. The facility information providing system according to any one of claims 1 to 3, **characterized in that**:
a plurality of facilities are disposed as said at least one facility; and
the wireless transmitters-receiver is disposed in each of the facilities or in the predetermined position in the vicinity of each of the facilities so that the predetermined information in response to each of the facilities is transmitted.

5. The facility information providing system according to any one of claims 1 to 4, **characterized in that**:
the predetermined information comprises information of a multi media including visual information, voice information and text information.

6. A facility information providing system comprising:
a portable terminal (7), which incorporates a wireless communication function;
a plurality of wireless transmitters-receivers (2), which are disposed in respective facilities or in the predetermined positions in the vicinity of the respective facilities, for communicating bidirectionally with the portable terminal (7);
a facility information database (6) for storing predetermined information in response to the facilities; and
a facility information providing server (5) for reading out the predetermined information in response to the facilities from the facility information database (6) and transmitting the read-out predetermined information in response to the facilities to the plurality of wireless transmitters-receivers, which are disposed in the facilities or on the predetermined positions in the vicinity of the facilities, via a communication device;
**characterized in that**:
the portable terminal (7) receives the predetermined information of a facility corresponding to a wireless transmitter-receiver (2), which is located within a communicable range, from the wireless transmitter-receiver (2) and presents same.

7. The facility information providing system according to claim 6, **characterized in that**:
the portable terminal (7) transmits information for identifying the portable terminal (7) to the wireless transmitter-receiver (2) within the communicable range;
the wireless transmitter-receiver (2) transmits both information for identifying the wireless transmitter-receiver (2) and information for identifying the portable terminal (7) transmitted from the portable terminal (7) to the facility information providing server (5) via a communication device, and
the facility information providing server (5) detects a position of the portable terminal (7) on the basis of the information for identifying the wireless transmitter-receiver (2) and the information for identifying the portable terminal (7), which are transmitted from the wireless transmitter-receiver (2).

8. The facility information providing system according to claim 6 or 7, **characterized in that**:
the facility information providing server (5) is connected to a network; and
the portable terminal (7) is connected to the facility information providing server (5) via the network to obtain predetermined information in response to the facility, when the portable terminal (7) is not within a range capable of communicating with any wireless transmitter-receiver (2).

9. The facility information providing system according to any one of claims 6 to 8, **characterized in that**:
the predetermined information includes information of a multi media including visual information, voice information and text information.

10. A facility information providing system comprising:
a portable terminal (7), which incorporates a wireless communication function;
a plurality of wireless transmitters-receivers (2), which are disposed in respective facilities or in the predetermined positions in the vicinity of the respective facilities, for communicating bidirectionally with the portable terminal (7);
a facility information database (6) for storing booking information of the facility and order information of the commodities provided by the facility; and
a facility information providing server (5) for reading out the booking information of the facility and the order information of the commodities provided by the facility from the facility information database (6) and transmitting the read out predetermined information in response to the facility to a plurality of wireless transmitters-receivers, which are disposed in the facilities or on the predetermined positions in the vicinity of the facilities, via a communication device;
**characterized in that**:
the portable terminal (7) performs a bidirectional communication with the facility information providing server (5) via the wireless transmitter-receiver (2) located in a communicable range, when the portable terminal (7) receives the booking information of the facility and the order information of the commodities provided by the facility in response to the wireless transmitter-receiver (2) from the wireless transmitter-receiver (2).

11. A facility information providing method comprising the processes of:
transmitting predetermined information in response to a facility to a wireless transmitter-receiver (2), which is disposed in the facility or on a predetermined position in the vicinity of the facility from a facility information providing site (4);
transmitting the predetermined information in response to the facility to a portable terminal (7) from the wireless transmitter-receiver (2) by wireless; and
receiving the predetermined information transmitted from the wireless transmitter-receiver (2) to present the predetermined information received.

12. The facility information providing method according to claim 11,
**characterized in that**:
said method further comprises a process of detecting a position of the portable terminal (7),
the predetermined information in response to the facility is transmitted from the wireless transmitter-receiver (2) of the facility to the portable terminal (7) by wireless, when the detected position of the portable terminal (7) is located within a predetermined range in the vicinity of the facility.

13. A facility information providing method comprising the processes of:
transmitting predetermined information in response to respective facilities to a plurality of wireless transmitters-receivers, which are disposed corresponding to the respective facilities therein or on the predetermined positions in the vicinity thereof, from a facility information providing server (5) via a communication device;
transmitting predetermined information of a facility corresponding to the wireless transmitter-receiver (2) to the portable terminal (7) within a communicable range from the wireless transmitter-receiver (2); and
receiving the predetermine information transmitted from the wireless transmitter-receiver (2) to present the predetermined information received in the portable terminal (7).

14. The facility information providing method according to claim 13, **characterized in that**:
the portable terminal (7) transmits information for identifying the portable terminal (7) to the wireless transmitter-receiver (2) within the communicable range;
the wireless transmitter-receiver (2) transmits both the information for identifying the wireless transmitter-receiver (2) and the information for identifying the portable terminal (7) transmitted from the portable terminal (7) to the facility information providing server (5) via a communication device; and
the facility information providing server (5) detects a position of the portable terminal (7) on the basis of the information for identifying the wireless transmitter-receiver (2) and the information for identifying the portable terminal (7), which are transmitted from the wireless transmitter-receiver (2).
